# EUROPÄISCHE PATENTSCHRIFT

(11) **EP 2 498 976 B1**
(45) Veröffentlichungstag und Bekanntmachung des Hinweises auf die Patenterteilung: **28.08.2013**
(21) Anmeldenummer: 10773084.8
(22) Anmeldetag: 02.11.2010
(51) Int. Cl.: B29C 55/06

(54) **VORRICHTUNG UND VERFAHREN ZUM LÄNGSRECKEN EINER FOLIENBAHN**
DEVICE AND METHOD FOR LONGITUDINALLY STRETCHING A FILM WEB
PROCÉDÉ ET DISPOSITIF D'ÉTIRAGE D'UN FILM EN BANDE

(30) Priorität: 10.11.2009 DE 102009046585
(43) Veröffentlichungstag der Anmeldung: 19.09.2012
(73) Patentinhaber: Windmöller & Hölscher KG, 49525 Lengerich (DE)
(72) Erfinder: LINKIES, Jürgen, 49536 Lienen (DE)
(86) Internationale Anmeldenummer: PCT/EP2010/066646
(87) Internationale Veröffentlichungsnummer: WO 2011/057918

(56) Entgegenhaltungen:
- JP-A- 1 237 118
- JP-U- 62 147 519
- US-A- 4 310 485
- US-A- 4 436 888

## Beschreibung

Die Erfindung betrifft eine Vorrichtung zum Längsrecken einer Folienbahn nach dem Oberbegriff des Anspruchs 1 sowie ein entsprechendes Verfahren nach dem Oberbegriff des Anspruchs 7.

Mit dem Recken von thermoplastischen Folien können deren Eigenschaften gezielt verändert werden. Solche Eigenschaften sind beispielsweise die Transparenz oder die Festigkeit. Ein solches Recken, das in Quer- und/oder Längsrichtung der Foliebahn erfolgen kann, kann direkt nach dem Extrusionsprozess inline erfolgen. Die extrudierte Folie kann aber auch zunächst aufgewickelt und der Vorrichtung zum Längsrecken nach einer erneuten Abwicklung zugeführt werden ("Offline-Verarbeitung").

Die Druckschrift WO 2006/063641 A1 zeigt in ihrer Figur 1 eine solche, in dem Fall mehrstufige, Vorrichtung zum Längsrecken einer Folienbahn. Charakteristisch für eine solche Vorrichtung sind:
- wenigstens eine Heizeinrichtung, in welcher die Folienbahn aufheizbar ist,
- wenigstens eine Abkühleinrichtung, in welcher die Folienbahn wieder abkühlbar, und
- wenigstens ein Reckwerk, in welcher die Folienbahn in ihrer Längsrichtung reckbar ist, wobei das Reckwerk eine erste Transportwalze, welche im Reckbetrieb eine erste Umfangsgeschwindigkeit aufweist und eine, entlang des Transportpfades der Folienbahn gesehen, der ersten Transportwalze folgende zweite Transportwalze mit einer zweiten Umfangsgeschwindigkeit umfasst, wobei die zweite Umfangsgeschwindigkeit größer ist als die erste Transportgeschwindigkeit.

In der Regel umfassen solche Vorrichtungen auch noch Annealing- oder Temperwalzen, die zwischen dem Reckwerk und den Kühlwalzen positioniert sind. Diese Walzen besitzen oft bereits eine niedrigere Temperatur als die Heizwalzen, sind jedoch derart temperiert, dass sie ein zu schnelles Abkühlen der Folie vermeiden. Der Unterschied zwischen Kühlwalzen und Annealingwalzen wird oft gemacht, weil die Annealingwalzen von heißem Öl und die Kühlwalzen von Wasser durchströmt werden.

Es ist eine Tatsache, dass der Großteil des eigentlichen Reckprozesses zwischen den eigentlichen Reckwalzen vorgenommen wird.

Aufgrund der größeren Umfangsgeschwindigkeit der zweiten Transportwalze im Vergleich zur Umfangsgeschwindigkeit der ersten Transportwalze erfolgt das Längsrecken, das heißt eine Dehnung der Folienbahn in ihrer Transportrichtung. Gleichzeitig nimmt die Dicke der Folienbahn ab. In der Heizeinrichtung wird die Folienbahn jedoch zunächst aufgeheizt. Nachdem sie gereckt wurde, durchläuft die Folienbahn die Abkühleinrichtung, mit welcher die Folienbahn wieder auf eine Temperatur deutlich unterhalb der Plastifizierungstemperatur abkühlbar ist. Mit einer solchen Vorrichtung zum Längsrecken sind Folienbahnen vorzugsweise aus thermoplastischen Materialien wie Polystyrol, Polypropylen oder Polyethylen verarbeitbar.

Der eigentliche Reckprozess findet zwischen den beiden Transportwalzen statt, wobei dieser Prozess unmittelbar nach dem Lösen der Folie von der ersten Transportwalze einsetzt.

Bei Dickenmessungen von Folienbahnen wurde jedoch festgestellt, dass die Dicken über die Querrichtung stark variieren. Das bedeutet, dass über die Querrichtung gesehen die Folienbahn unterschiedlich stark gereckt wurde. Folien mit unterschiedlichen Dicken über die Querrichtung sind jedoch oft nicht gewünscht.

Die Druckschrift JP 62 147519 U offenbart eine zusätzliche Vorrichtung zum Längsrecken einer Folienbahn.

Die Aufgabe der vorliegenden Erfindung ist es daher, eine Vorrichtung und ein Verfahren vorzuschlagen, mit welchen Folienbahnen mit einer geringeren Dickenvarianz herstellbar sind.

Die Aufgabe wird gelöst durch eine Vorrichtung nach Anspruch 1 und ein Verfahren gemäβ Anspruch 6.

Demnach ist eine Anpresseinrichtung vorgesehen, mit welcher die Folienbahn entlang einer Linie, welche im Bereich der Ablösekante der Folienbahn von der ersten Transportwalze liegt, an die erste Transportwalze andrückbar ist. Zusätzlich oder stattdessen ist eine Anpresseinrichtung vorgesehen, mit welcher die Folienbahn entlang einer Linie, welche im Bereich der Anlegelinie der Folienbahn an die zweite Transportwalze liegt, an die zweite Transportwalze andrückbar ist.

Der Erfindung liegt der folgende Erklärungsversuch für die Dickenvarianz zugrunde: Da das Recken wie beschrieben direkt nach dem Ablösen der Folie von der ersten Transportwalze beginnt, kann dies nur bedeuten, dass die Folienbahn sich nicht entlang einer Linie, wie es in der Theorie erwartet wird, löst. Über die Breite der Folie gesehen löst diese sich also an verschiedenen Umfangswinkelpositionen ab. Gleiches kann beim Anlegen der Folienbahn an die zweite Transportwalze vorkommen. Hier legt sich die Folie über ihre Breite gesehen an verschiedenen Umfangswinkeln an die zweite Transportwalze an.

Mit der Anpresseinrichtung löst sich nun die Folienbahn entlang einer Linie quer zu ihrer Transportrichtung von der ersten Transportwalze ab. Damit wird das Recken über die Breite der Folienbahn vergleichmäßigt, so dass auch die Dicke der Folienbahn eine geringere Varianz aufweist. Die der zweiten Transportwalze zugeordnete Anpresseinrichtung drückt die Folienbahn entlang einer Linie quer zu ihrer Transportrichtung an die zweite Transportwalze an, was zu einer weiteren Vergleichmäßigung des Reckens führt.

Der Ausdruck "im Bereich" meint, dass die Anpresseinrichtungen zwar genau entlang der Ablöse- und/oder Anlegelinie wirken, dass jedoch technische Toleranzen zu berücksichtigen sind. Dies kann dazu führen, dass die Anpresseinrichtung an der ersten Transportwalze in Transportrichtung der Folienbahn gesehen etwas in dieser Richtung verschoben angeordnet ist. Die Anpresseinrichtung an der zweiten Transportwalze wäre dann entgegen der Transportrichtung verschoben. Von der Ablöselinie gesehen liegt die Verschiebung im Bereich von -1 Grad bis +5 Grad in Drehrichtung der ersten Transportwalze. In Drehrichtung der zweiten Transportwalze liegt dieser Bereich entsprechend von -5 Grad bis +1 Grad von der Anlegelinie aus gesehen.

Die folgenden Erläuterungen zu Ausführungsbeispielen und vorteilhaften Ausführungsformen beziehen sich oft jeweils auf die der ersten Transportwalze zugeordneten Anpresseinrichtung. Sie sind jedoch auch auf die der zweiten Transportwalze zugeordnete Anpresseinrichtung übertragbar.

In einer vorteilhaften Weiterbildung der Erfindung ist vorgesehen, dass die Anpresseinrichtung die Folienbahn entlang einer Linie andrückt, die die Berührungslinie einer Tangentialebene an der ersten Transportwalze darstellt, wobei diese Tangentialebene die gemeinsame Tangentialebene der ersten und der zweiten Transportwalze ist. Diese Tangentialebene stellt die Tangentialebene dar, entlang welcher die Folie von der ersten zu der zweiten Transportwalze im Wesentlichen geführt wird. Die Berührungslinien der Tangentialebenen stellen den optimalen Ablösepunkt von der ersten Transportwalze und den optimalen Anlagepunkt an der zweiten Transportwalze dar.

Vorteilhaft ist, wenn die Anpresseinrichtung in radialer Richtung der ersten Transportwalze und/oder in ihrer Umfangsrichtung mittels einer ersten beziehungsweise einer zweiten Verstelleinrichtung verstellbar ist. Auf diese Weise kann die Lage der Ablöselinie beeinflusst werden.

In einer vorteilhaften Ausgestaltung der Erfindung ist vorgesehen, dass die Anpresseinrichtung eine Anpresswalze umfasst. Mit einer solchen Anpresswalze lässt sich ein verhältnismäßig hoher Anpressdruck aufbringen.

Weiterhin ist vorteilhaft, wenn zumindest Bereiche der Umfangsfläche der Anpresswalze mit einem Elastomer beschichtet sind. Es sind hier verschiedene elastomere Materialien denkbar. Ein Beispiel ist Gummi.

Weitere Ausführungsbeispiele der Erfindung gehen aus der gegenständlichen Beschreibung und den Ansprüchen hervor.

Die einzelnen Figuren zeigen:
- Fig. 1: eine Vorrichtung zum Längsrecken einer Folienbahn nach dem Stand der Technik
- Fig. 2: Ansicht einer ersten Transportwalze mit einer im Reckprozess typischen Ablösekante nach dem Stand der Technik
- Fig. 3: Ansicht eines Ausschnittes einer Vorrichtung nach dem Stand der Technik
- Fig. 4: Verstelleinrichtungen zum Verstellen einer Anpresswalze in einer erfindungsgemäßen Vorrichtung

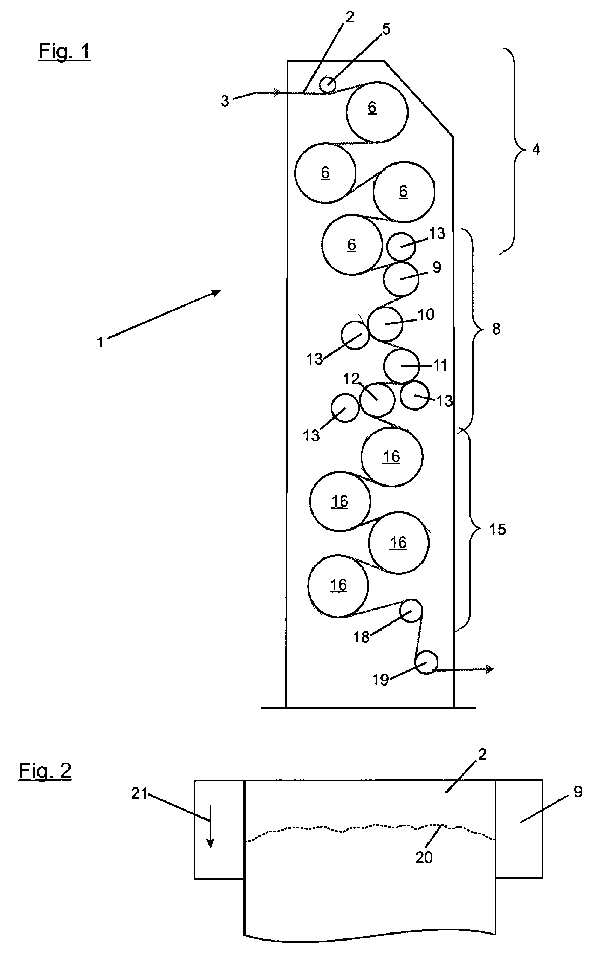

Fig. 1 zeigt eine Vorrichtung 1 zum Längsrecken einer Folienbahn 2, die entlang eines Transportpfades in der Transportrichtung 3 geführt wird. Die Folienbahn 2 wird von einer Extrusionseinrichtung oder einer Abwickelvorrichtung zugeführt. Zunächst passiert die Folienbahn eine Leitwalze 5, bevor sie in der Heizeinrichtung 4 nacheinander über vier Heizwalzen 6, die temperierbar sind, läuft.

Nachdem die Folienbahn 2 auf diese Weise auf oder oberhalb der Plastifizierungstemperatur aufgeheizt wurde, wird sie in das Reckwerk 8 eingeführt. Das Reckwerk 8 umfasst Transportwalzen 9, 10, 11, 12, wobei die Walzenpaare 9 und 10 und die Walzenpaare 11 und 12 jeweils einen so genannten Reckspalt ausbilden. Die Walzen 10 und 12 haben dabei jeweils eine größere Umfangsgeschwindigkeit als die ihnen zugeordneten Walzen 9 und 11. Die Walzen 10 und 11 können allerdings dieselbe Umfangsgeschwindigkeit aufweisen. Jeder der vier genannten Transportwalzen ist eine Andrückwalze 13 zugeordnet, welche jeweils dafür Sorge trägt, dass die Folienbahn 2 fest auf den Transportwalzen aufliegt und nicht durchrutscht.

In der Abkühleinrichtung 15 wird die Folienbahn 2 über die Abkühlwalzen 16 geführt. In der Abkühleinrichtung 15 können auch weitere Walzen, die so genannten Annealing-Walzen vorgesehen sein, die bereits eingangs beschrieben wurden, die hier aber nicht dargestellt sind.

Nachdem die Folienbahn 2 zwei weitere Leitwalzen 18 und 19 passiert hat, kann sie einer Wickelvorrichtung oder einer beliebigen Weiterverarbeitungseinrichtung zugeführt werden.

Die Figur 2 verdeutlicht die Ablösekante 20, die in der Praxis auftritt, wenn die Folienbahn 2 die Transportwalze 9 verlässt. Die Drehrichtung der Walze 9 wird durch den Pfeil 21 angegeben. Die Folienbahn 2 löst sich nicht, wie es allgemein zu erwarten ist, entlang einer Geraden, die parallel zur Drehachse der Walze 9 liegt (nominelle Ablöselinie), von der Walze 9. Vielmehr weist die Ablösekante 20 einen unregelmäßigen Verlauf aus. Einzig eine Tendenz der Folienbahn, sich an den Rändern etwas später von der Walze 9 zu lösen als in der Mitte, ist erkennbar. In den Bereichen, in denen sich die Folienbahn 2 vorzeitig löst, ist eine stärkere Reckung und eine reduzierte Dicke der Folienbahn erkennbar.

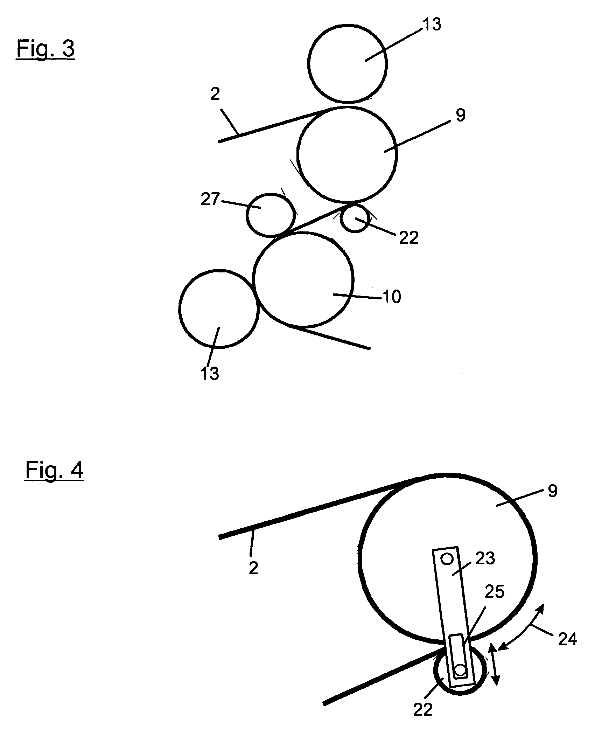

Um dem Problem abzuhelfen, ist gemäß Figur 3 eine Anpresseinrichtung darstellende Anpresswalze 22 vorgesehen, die die Folienbahn 2 bis zur nominellen Ablöselinie auf dem Umfang der Transportwalze 9 hält. Diese nominelle Ablöselinie ist der Berührungspunkt der gemeinsamen Tangentialebene der Walzen 9 und 10 mit der Walze 9. Demselben Zweck dient die Anpresswalze 27, die an der zweiten Transportwalze 10 an der Linie angeordnet ist, an der die genannte gemeinsame Tangentialebene die Transportwalze 10 berührt. Damit ist sichergestellt, dass die Folienbahn 2 an dieser Linie über ihre gesamte Breite an der Transportwalze 10 anliegt. DEurch das Vorsehen der Anpresswalze 27 ist also an dieser Linie der Reckvorgang über die gesamte Folienbreite beendet.

Die Figur 4 zeigt eine weitere Ausführungsform der Erfindung. Die Anpresswalze 22 ist in einem Schwenkarm 23 gelagert, so dass die Walze entlang des Pfeils 24 entlang der Umfangsrichtung der Walze 9 verschwenkbar ist. Anstelle eines Schwenkarms ist auch eine passend ausgeformte Kulissenführung in einem Teil des Maschinengestells denkbar. Weitere Ausführungsformen einer Schwenkeinrichtung sind dem Fachmann bekannt und können sie nach Bedarf einsetzen. Eine Schwenkeinrichtung ist notwendig, wenn die relativen Positionen der Walzen 9 und 10 zueinander veränderbar sind, so dass sich der Berührungspunkt der Tangentialebene verändert.

Der Schwenkarm 23 ist mit einer Führung 25 versehen, entlang welcher die Walze 22 in radialer Richtung der Walze 9 (angegeben durch den Doppelpfeil 26) bewegbar ist, um mit unterschiedlichen Anpressdrücken auf die Folienbahn 2 wirken zu können. Auch hier sind weitere Verstelleinrichtungen denkbar, insbesondere solche, die unabhängig von dem Schwenkarm funktionieren.

Bei Versuchen hat sich gezeigt, dass in einer erfindungsgemäßen Vorrichtung die Dicke der Folienbahn über ihre Breite gleichmäßiger ist als in Vorrichtungen nach dem Stand der Technik. Damit wird insgesamt die Qualität der Folie erhöht.

| **Bezugszeichenliste** | |
|---|---|
| 1 | Vorrichtung zum Längsrecken einer Folienbahn 2 |
| 2 | Folienbahn |
| 3 | Transportrichtung |
| 4 | Heizeinrichtung |
| 5 | Leitwalze |
| 6 | Heizwalze |
| 7 | |
| 8 | Reckwerk |
| 9 | Transportwalze |
| 10 | Transportwalze |
| 11 | Transportwalze |
| 12 | Transportwalze |
| 13 | Andrückwalze |
| 14 | |
| 15 | Abkühleinrichtung |
| 16 | Abkühlwalze |
| 17 | |
| 18 | Leitwalze |
| 19 | Leitwalze |
| 20 | Ablösekante |
| 21 | Drehrichtung der Walze 9 |
| 22 | Anpresswalze |
| 23 | Schwenkarm |
| 24 | Schwenkrichtung |
| 25 | Führung |
| 26 | Radiale Bewegungsrichtung |
| 27 | Anpresswalze |

## Patentansprüche

1. Vorrichtung zum Längsrecken einer Folienbahn (1), umfassend:
- wenigstens eine Heizeinrichtung (4), in welcher die Folienbahn (2) aufheizbar ist,
- wenigstens eine Abkühleinrichtung (15), in welcher die Folienbahn (2) wieder abkühlbar, und
- wenigstens ein Reckwerk (8), in welchem die Folienbahn (2) in ihrer Längsrichtung reckbar ist, wobei das Reckwerk (8) eine erste Transportwalze (9, 10, 11, 12), welche im Reckbetrieb eine erste Umfangsgeschwindigkeit aufweist und eine entlang des Transportpfades der Folienbahn (2) gesehen der ersten Transportwalze folgende zweite Transportwalze mit einer zweiten Umfangsgeschwindigkeit umfasst, wobei die zweite Umfangsgeschwindigkeit größer ist als die erste Transportgeschwindigkeit, wobei
eine Anpresseinrichtung (22) vorgesehen ist, mit welcher die Folienbahn (2) entlang einer Linie, welche im Bereich der Ablöselinie der Folienbahn (2) von der ersten Transportwalze liegt, an die erste Transportwalze andrückbar ist und/oder eine Anpresseinrichtung (27) vorgesehen ist, mit welcher die Folienbahn (2) entlang einer Linie, welche im Bereich der Anlegelinie der Folienbahn (2) an die zweite Transportwalze liegt, an die zweite Transportwalze (10) andrückbar ist,
wobei der genannte Bereich von -1 bis +5 Grad von der Ablöselinie und von - 5 bis +1 Grad von der Anlegellnle In Drehrichtung der Transportwalzen liegt, und wobei die Anpresseinrichtung (22, 27) die Folienbahn (2) entlang einer Linie andrückt, die die Berührungslinie einer Tangentialebene an der ersten oder der zweiten Transportwalze darstellt, wobei diese Tangentialebene die gemeinsame Tangentialebene der ersten und der zweiten Transportwalze ist.

2. Vorrichtung nach Anspruch 1,
**gekennzeichnet durch**
eine erste Verstelleinrichtung, mit welcher die Anpresseinrichtung (22, 27) in radialer Richtung der ersten oder der zweiten Transportwalze verstellbar ist.

3. Vorrichtung nach einem der vorstehenden Ansprüche,
**gekennzeichnet durch**
eine zweite Verstelleinrichtung, mit weicher die Anpresseinrichtung (22, 27) in Umfangsrichtung der ersten oder der zweiten Transportwalze verstellbar ist

4. Vorrichtung nach einem der vorstehenden Ansprüche,
dadurch gekenntzeichnet, dass
die Anpresseinrichtung (22, 27) eine Anpresswalze ist.

5. Vorrichtung nach dem vorstehenden Anspruch,
**dadurch gekennzeichnet, dass**
die zumindest Bereiche der Umfangsfläche der Anpresswalze (22, 27) mit einem Elasbomer beschichtet sind.

6. Verfahren zum Längsrecken einer Folienbahn, bei dem:
- die Folienbahn (2) in wenigstens einer Heizeinrichtung (4) aufgeheizt wird,
- die Folienbahn (2) in wenigstens einer Abkühleinrichtung (15) wieder abgekühlt wird, und
- die Folienbahn (2) in einem Reckwerk (8) in ihrer Längsrichtung gereckt wird, wobei das Reckwerk (8) eine erste Transportwalze, welche im Reckbetrieb eine erste Umfangsgeschwindigkeit aufweist, und eine entlang des Transportpfades der Folienbahn (2) gesehen der ersten Transportwalze folgende zweite Transportwalze mit einer zweiten Umfangsgeschwindigkeit umfasst, wobei die zweite Umfangsgeschwindigkeit größter ist als die erste Transportgeschwindigkeit,
wobei
die Folienbahn (2) entlang einer Linie, welche im Bereich der Ablöselinie der Folienbahn (2) von der ersten Transportwalze liegt, mit einer Anpresseinrichtung (22) an die erste Transportwalze (9) angedrückt wird und/oder dass die Folienbahn (2) entlang einer Linie, welche im Bereich der Anlegelinie der Folienbahn (2) an die zweite Transportwalze liegt, mit einer Anpresseinrichtung (27) an die zweite Transportwalze (10) angedrückt wird,
wobei der genannte Bereich von -1 bis +5 Grad von der Ablösetinie und von - 5 bis +1 Grad von der Anlegelinie in Drehrichtung der Transportwalzen liegt, und wobei die Anpresseinrichtung (22, 27) die Folienbahn (2) entlang einer Linie andrückt, die die Berührungslinie einer Tangentialebene an der ersten oder der zweiten Transportwalze darstellt, wobei diese Tangentialebene die gemeinsame Tangentialebene der ersten und der zweiten Transportwalze ist.

## Claims

1. Apparatus for longitudinally stretching a film web (1), comprising:
- at least one heating device (4), in which the film web (2) can be heated up,
- at least one cooling device (15), in which the film web (2) can be cooled down again, and
- at least one stretching unit (8), in which the film web (2) can be stretched in its longitudinal direction, and the stretching unit (8) comprising a first transport roll (9, 10, 11, 12) which, during stretching operation, has a first circumferential speed, and a second transport roll, following the transport roll as seen along the transport path of the film web (2) and having a second circumferential speed, the second circumferential speed being greater than the first circumferential speed,
wherein a pressing device (22) is provided, with which the film web (2) can be pressed against the first transport roll along a line which is located in the region of the separation line of the film web (2) from the first transport roll, and/or wherein a pressing device (27) is provided, with which the film web (2) can be pressed against the second transport roll (10) along a line which is located in the region of the contact line of the film web (2) on the second transport roll,
the said region being located from -1 to +5 degree from the separation line and from -5 to +1 degree from the contact line in the direction of rotation of the transport rolls, and
the pressing device (22, 27) pressing on the film web (2) along a line which represents the line of contact of a tangential plane on the first or on the second transport roll, this tangential plane being the common tangential plane to the first and to the second transport roll.

2. Apparatus according to Claim 1,
**characterized by**
a first adjusting device, with which the pressing device (22, 27) can be adjusted in the radial direction of the first or the second transport roll.

3. Apparatus according to one of the preceding claims,
**characterized by**
a second adjusting device, with which the pressing device (22, 27) can be adjusted in the circumferential direction of the first or the second transport roll.

4. Apparatus according to one of the preceding claims,
**characterized in that**
the pressing device (22, 27) is a pressure roll.

5. Apparatus according to the preceding claim, **characterized in that**
at least regions of the circumferential surface of the pressure roll (22, 27) are coated with an elastomer.

6. Method for longitudinally stretching a film web, in which
- the film web (2) is heated up in at least one heating device (4),
- the film web (2) is cooled down again in at least one cooling device (15), and
- the film web (2) is stretched in its longitudinal direction in a stretching unit (8), the stretching unit (8) comprising a first transport roll which has a first circumferential speed during stretching operation, and a second transport roll, following the first transport roll as seen along the transport path of the film web (2) and having a second circumferential speed, the second circumferential speed being greater than the first circumferential speed,
wherein the film web (2) is pressed against the first transport roll (9) by a pressing device (22) along a line which is located in the region of the separation line of the film web (2) from the first transport roll, and/or
wherein the film web (2) is pressed against the second transport roll (10) by a pressing device (27) along a line which is located in the region of the contact line of the film web (2) on the second transport roll,
the said region being located from -1 to +5 degree from the separation line and from -5 to +1 degree from the contact line in the direction of rotation of the transport rolls, and
the pressing device (22, 27) pressing on the film web (2) along a line which represents the line of contact of a tangential plane on the first or on the second transport roll, this tangential plane being the common tangential plane to the first and to the second transport roll.

## Revendications

1. Dispositif (1) d'étirage en longueur d'une bande de film, comprenant :
- au moins un dispositif de chauffage (4) dans lequel la bande de film (2) peut être chauffée,
- au moins un dispositif de refroidissement (15) dans lequel la bande de film (2) peut être refroidie, et
- au moins un banc d'étirage (8) dans lequel la bande de film (2) peut être étirée dans sa direction longitudinale, le banc d'étirage (8) comprenant un premier rouleau de transport (9, 10, 11, 12) qui présente une première vitesse périphérique pendant le fonctionnement d'étirage, et un deuxième rouleau de transport suivant le premier rouleau de transport vu le long de la trajectoire de transport de la bande de film (2) ayant une deuxième vitesse périphérique, la deuxième vitesse périphérique étant supérieure à la première vitesse périphérique,
un dispositif de pressage (22) étant prévu, avec lequel la bande de film (2) peut être pressée contre le premier rouleau de transport le long d'une ligne qui se situe dans la région de la ligne de décollement de la bande de film (2) du premier rouleau de transport et/ou un dispositif de pressage (27) étant prévu, avec lequel la bande de film (2) peut être pressée contre le deuxième rouleau de transport (10) le long d'une ligne qui se situe dans la région de la ligne d'application de la bande de film (2) contre le deuxième rouleau de transport,
ladite région étant comprise entre -1 et +5 degrés par rapport à la ligne de décollement et entre -5 et +1 degré par rapport à la ligne d'application dans le sens de rotation des rouleaux de transport, et
le dispositif de pressage (22, 27) pressant la bande de film (2) le long d'une ligne qui constitue la ligne de contact d'un plan tangentiel contre le premier ou le deuxième rouleau de transport, ce plan tangentiel étant le plan tangentiel commun du premier et du deuxième rouleau de transport.

2. Dispositif selon la revendication 1,
**caractérisé par**
un premier dispositif de réglage avec lequel le dispositif de pressage (22, 27) peut être réglé dans la direction radiale du premier ou du deuxième rouleau de transport.

3. Dispositif selon l'une quelconque des revendications précédentes,
**caractérisé par**
un deuxième dispositif de réglage avec lequel le dispositif de pressage (22, 27) peut être réglé dans la direction périphérique du premier ou du deuxième rouleau de transport.

4. Dispositif selon l'une quelconque des revendications précédentes,
**caractérisé en ce que**
le dispositif de pressage (22, 27) est un rouleau de pressage.

5. Dispositif selon la revendication précédente, **caractérisé en ce**
**qu'**au moins des régions de la surface périphérique du rouleau de pressage (22, 27) sont revêtues d'un élastomère.

6. Procédé d'étirage en longueur d'une bande de film, dans lequel :
- la bande de film (2) est chauffée dans au moins un dispositif de chauffage (4),
- la bande de film (2) est refroidie dans au moins un dispositif de refroidissement (15), et
- la bande de film (2) est étirée dans un banc d'étirage (8) dans sa direction longitudinale, le banc d'étirage (8) comprenant un premier rouleau de transport qui présente une première vitesse périphérique pendant le fonctionnement d'étirage, et un deuxième rouleau de transport suivant le premier rouleau de transport vu le long de la trajectoire de transport de la bande de film (2) ayant une deuxième vitesse périphérique, la deuxième vitesse périphérique étant supérieure à la première vitesse périphérique,
la bande de film (2) étant pressée au moyen d'un dispositif de pressage (22) contre le premier rouleau de transport (9) le long d'une ligne qui se situe dans la région de la ligne de décollement de la bande de film (2) du premier rouleau de transport et/ou
la bande de film (2) étant pressée au moyen d'un dispositif de pressage (27) contre le deuxième rouleau de transport (10) le long d'une ligne qui se situe dans la région de la ligne d'application de la bande de film (2) contre le deuxième rouleau de transport,
ladite région étant comprise entre -1 et +5 degrés par rapport à la ligne de décollement et entre -5 et +1 degré par rapport à la ligne d'application dans le sens de rotation des rouleaux de transport, et
le dispositif de pressage (22, 27) pressant la bande de film (2) le long d'une ligne qui constitue la ligne de contact d'un plan tangentiel contre le premier ou le deuxième rouleau de transport, ce plan tangentiel étant le plan tangentiel commun du premier et du deuxième rouleau de transport.
